# EUROPEAN PATENT APPLICATION

(11) **EP 4 693 516 A1**
(43) Date of publication of application: **11.02.2026**
(21) Application number: 24931824.7
(22) Date of filing: 28.06.2024
(51) Int. Cl.: H01M 4/62, H01M 10/0525

(54) **LITHIUM REPLENISHING ADDITIVE AND PREPARATION METHOD THEREFOR, POSITIVE ELECTRODE SLURRY, AND BATTERY**

(30) Priority: 29.03.2024 CN 202410382941
(71) Applicant: Beijing Easpring Material Technology Co., Ltd., Beijing 100160 (CN)
(72) Inventor: SHAO, Zongpu, Beijing 100160 (CN); LIU, Yafei, Beijing 100160 (CN); YANG, Haoran, Beijing 100160 (CN); ZHENG, Changchun, Beijing 100160 (CN); CHEN, Yanbin, Beijing 100160 (CN)
(74) Representative: Nederlandsch Octrooibureau
(86) International application number: PCT/CN2024/102744
(87) International publication number: WO 2025/200160

(57) **Abstract**

Provided are a lithium supplement and a preparation method thereof, cathode slurry, and a battery. The lithium supplement includes a core and a coating layer. The core satisfies a chemical formula LiₓM1_{y}M2_{1-y}O₆, where: 6≤x≤8; 0<y<1; M1 is at least one of Zr, Nb, Sb, Bi, Ru, Ta, Sn, Hf, Ir, Pr, Pt, or Np; and M2 is at least one of W, Ge, Ca, Ce, K, or Ta. The coating layer is located on at least part of a surface of the core. The coating layer includes a lithium-containing metallic oxide and a carbon material. The lithium-containing metallic oxide satisfies a chemical formula LiₐM_{b}O_{c}, where: 1.8≤a≤2; 0.7≤b≤1.1; 2.8≤c≤3; and M comprises Ti and/or Zr. An X-ray diffraction peak of the lithium supplement at a 2θ diffraction angle in a range from 20.1° to 20.3° has a peak intensity of S1, an X-ray diffraction peak of the lithium supplement at a 2θ diffraction angle in a range from 17° to 17.3° has a peak intensity of S2, and S1/S2 ranges from 0.02 to 0.05.

## Description

### FIELD

The present disclosure relates to the technical field of batteries, and particularly, to a lithium supplement and a preparation method thereof, a cathode slurry, and a battery.

### BACKGROUND

A solid electrolyte interphase (SEI) film is formed at a negative electrode interface during an initial charge process of a lithium-ion battery, resulting in irreversible capacity loss of the battery. Thus, an energy density of the lithium-ion battery is reduced. The capacity loss during the formation of the SEI film can be effectively alleviated through lithium supplementation technology. The lithium supplementation technology mainly includes cathode-side lithium supplementation and negative electrode-side lithium supplementation. The techniques for the negative electrode-side lithium supplementation require a metallic lithium material, which has problems such as complex process and high environmental requirements. The techniques for the cathode-side lithium supplementation have relatively high safety and compatibility and provide relatively high feasibility. However, there are still many problems in terms of actual production and application processes of the cathode-side lithium supplementation, which need to be further solved.

### SUMMARY

A first aspect of the present disclosure provides a lithium supplement. The lithium supplement includes a core and a coating layer. The core satisfies a chemical formula LiₓM1_{y}M2_{1-y}O₆, where: 6≤x≤8; 0<y<1; M1 is at least one of Zr, Nb, Sb, Bi, Ru, Ta, Sn, Hf, Ir, Pr, Pt, or Np; and M2 is at least one of W, Ge, Ca, Ce, K, or Ta. The coating layer is located on at least part of a surface of the core. The coating layer includes a lithium-containing metallic oxide and a carbon material. The lithium-containing metallic oxide satisfies a chemical formula LiₐM_{b}O_{c}, where: 1.8≤a≤2; 0.7≤b≤1.1; 2.8≤c≤3; and M includes Ti and/or Zr. An X-ray diffraction peak of the lithium supplement at a 20 diffraction angle in a range from 20.1° to 20.3° has a peak intensity of S1, and an X-ray diffraction peak of the lithium supplement at a 2θ diffraction angle in a range from 17° to 17.3° has a peak intensity of S2, S1/S2 ranging from 0.02 to 0.05. Thus, the lithium supplement has a relatively high lithium supplementation capacity, a relatively high lithium-ion migration rate, and excellent processing performance.

In some embodiments, a mass fraction of the lithium-containing metallic oxide in the lithium supplement ranges from 0.01% to 0.1%, and/or a mass fraction of the carbon material in the lithium supplement ranges from 0.01% to 0.5%. Thus, the lithium supplement has a relatively high lithium supplementation capacity.

In some embodiments, lattice parameters of the core satisfy: a=b; a≠c; and c/a ranging from 2 to 3. Thus, the lithium-ion migration rate of the lithium supplement can be improved.

In some embodiments, a ranges from 0.4 nm to 0.7 nm, and c ranges from 1.4 nm to 1.6 nm. Thus, the lithium-ion migration rate of the lithium supplement can be further improved.

In some embodiments, the core has a Dv50 particle size ranging from 1 µm to 10 µm, and/or the coating layer has a thickness ranging from 50 nm to 500 nm. Thus, the coating layer can improve storage performance of the lithium supplement and enhance electrical conductivity of the lithium supplement, thereby facilitating sufficient utilization of lithium supplementation capability of the lithium supplement.

In some embodiments, the core includes at least one of Li₈Zr_{0.9}W_{0.1}O₆, Li₇Nb_{0.8}Ta_{0.2}O₆, Li₇Sb_{0.9}Ta_{0.1}O₆, Li₇Ru_{0.7}W_{0.2}Ce_{0.1}O₆, Li₈Sn_{0.9}Ca_{0.1}O₆, Li₈Hf_{0.7}W_{0.2}Ca_{0.1}O₆, Li₈Ir_{0.6}W_{0.2}Ce_{0.2}O₆, Li₈Pr_{0.5}W_{0.3}Ca_{0.2}O₆, or Li₈Pt_{0.7}W_{0.2}Ca_{0.1}O₆. Thus, the lithium supplementation capacity of the lithium supplement can be effectively improved, and a decomposition potential of the lithium supplement can be reduced.

In some embodiments, a graphitization degree of the carbon material is greater than or equal to 60%. Thus, the electrical conductivity of the lithium supplement can be further improved.

A second aspect of the present disclosure provides a method for preparing the aforementioned lithium supplement. The method includes: performing first sintering treatment on a lithium source, an M1 source, and an M2 source in an oxygen-containing atmosphere to obtain the core; performing second sintering treatment on the core, the M source, and the carbon source in an inert atmosphere to form the coating layer on at least part of the surface of the core, to obtain the lithium supplement. Thus, the aforementioned lithium supplement having the better lithium supplementation performance can be prepared by a simple method.

In some embodiments, the lithium source includes at least one of lithium carbonate, lithium hydroxide, or lithium oxide; and/or the M1 source includes at least one of oxide of M1, chloride of M1, nitrate of M1, or hydroxide of M1; and/or the M2 source includes at least one of oxide of M2, chloride of M2, nitrate of M2, or hydroxide of M2. Thus, these conditions are conducive to the formation of the core having a relatively high lithium supplementation capacity.

In some embodiments, a temperature of the first sintering treatment ranges from 700°C to 1,200°C, and a duration of the first sintering treatment ranges from 8 hours to 24 hours. Thus, these conditions are conducive to obtaining pure-phase core particles having a moderate particle size.

In some embodiments, the M source includes at least one of zirconium propoxide, zirconium oxide, zirconium nitrate, zirconium oxychloride, lithium zirconate, zirconium chloride, titanium oxide, titanium tetrachloride, titanium nitrate, or titanium alkoxide; and/or the carbon source includes at least one of glucose, starch, sucrose, or graphite. Thus, these conditions are conducive to formation of lithium-containing metallic oxide on the surface of the core.

In some embodiments, a temperature of the second sintering treatment ranges from 400°C to 800°C; and a duration of the second sintering treatment ranges from 6 hours to 10 hours. Thus, these conditions are conducive to the formation of the lithium-containing metallic oxide and the carbon material in the coating layer.

In some embodiments, the method further includes, prior to the second sintering treatment: mixing the core, the M source, and the carbon source in a solvent, and performing drying treatment on the mixture. Thus, it is conducive to improving coating uniformity of the coating layer.

In some embodiments, the solvent includes at least one of ethanol and isopropanol, and/or the drying treatment includes at least one of spray drying, freeze drying, or flash drying, which are conducive to improving the coating uniformity of the coating layer.

A third aspect of the present disclosure provides a cathode slurry. The cathode slurry includes the aforementioned lithium supplement or the lithium supplement prepared by the aforementioned method. Thus, the cathode slurry has all the characteristics and advantages of the aforementioned lithium supplement and the aforementioned method for preparing the lithium supplement, and details thereof will be omitted herein.

In some embodiments, the cathode slurry has a viscosity ranging from 1,000 mPa·s to 8,000 mPa·s, which is conducive to improving processing performance of the cathode slurry.

A fourth aspect of the present disclosure provides a battery. The battery includes a cathode plate. The cathode plate includes a cathode current collector and a cathode active material layer. The cathode active material layer is at least located on a side of the cathode current collector. The cathode active material layer is prepared with the aforementioned cathode slurry. Thus, the battery has all the characteristics and advantages of the aforementioned cathode slurry, and details thereof will be omitted herein.

### BRIEF DESCRIPTION OF THE DRAWINGS

The above and other aspects and advantages of embodiments of the present disclosure will become apparent and more readily appreciated from the following descriptions made with reference to the accompanying drawings.
FIG. 1 is a scanning electron microscope image of a lithium supplement in Example 1 of the present disclosure.
FIG. 2 is an X-ray diffraction graph of a lithium supplement in Example 1 and Comparative Example 5 of the present disclosure.
FIG. 3 is a charge-discharge graph of a battery prepared with a lithium supplement in Example 1 of the present disclosure.

### DETAILED DESCRIPTION

Embodiments of the present disclosure are described in detail below, examples of which are illustrated in the accompanying drawings, but unnecessary detailed description may be omitted. For example, detailed description of well-known items and repeated description of actually identical structures may be omitted in some instances. In order to avoid the following description being unnecessarily redundant, facilitating understanding by those skilled in the art. Moreover, the accompanying drawings and the following description are provided for enabling those skilled in the art to fully understand the present disclosures rather than limiting the subject matters recited in claims.

Unless otherwise defined, all technical and scientific terms used herein have the same meaning as commonly understood by those skilled in the art of the present disclosure. The terms in the present disclosure are only used for the purpose of describing exemplary embodiments, and are not intended to limit the present disclosure. Unless otherwise specified, numerical values of various parameters mentioned in the present disclosure can be measured using various measurement methods commonly used in the art (for example, they can be tested according to methods given in the embodiments of the present disclosure).

The terms such as "comprising", "including" and "having" and any variations thereof as used in the specification and claims of the present disclosure are open-ended expressions, i.e., including contents specified in the present disclosure but not excluding other contents.

In the description of the present disclosure, regardless of whether words such as "about" or "approximately" are used, all the numbers disclosed herein are approximate values. The value of each number may differ by less than 10% or by a difference that is considered reasonable by those skilled in the art, such as 1%, 2%, 3%, 4% or 5%.

All embodiments and optional embodiments of the present disclosure can be combined with one another to form a new technical solution, unless otherwise stated.

All technical features and optional technical features of the present disclosure can be combined with one another to form a new technical solution, unless otherwise stated.

A cathode-side lithium supplement in the related art includes a binary lithium-containing compound, such as Li₂O, Li₂O₂, and Li₃N, and a ternary lithium-containing compound, such as Li₂NiO₂, LisCoO₄, and Li₅FeO₄. The binary lithium-containing compound has relatively poor stability in an atmospheric environment and can be hardly applied in industrial applications. The ternary lithium-containing compound is more stable than the binary lithium-containing compound. However, the ternary lithium-containing compound still has disadvantages of stronger surface alkalinity and higher decomposition potential. Specifically, when the lithium supplement is added to a cathode slurry, a lithium precipitation reaction occurs due to a strong alkaline surface of the lithium supplement, which in turn increases alkalinity of the cathode slurry, thereby resulting in a significant increase in a viscosity of the cathode slurry or even the formation of a jelly-like slurry, failing to meet coating requirements. When the decomposition potential of the lithium supplement is excessively high, a lithium supplementation capacity of the lithium supplement can be only sufficiently released under a relatively high voltage during an initial charge process of a battery. When the voltage applied during the initial charge process is excessively high, a cathode active material in a cathode active material layer undergoes an irreversible structural change, resulting in a decrease in lithium deintercalation sites of the cathode active material and an energy density of the battery. When the voltage applied during the initial charge process is excessively low, the lithium supplementation capacity of the lithium supplement cannot be fully utilized, and a lithium supplementation effect of the lithium supplement is poor.

In the present disclosure, an elemental composition of a core of the lithium supplement is optimized by adding doping elements to the ternary lithium-containing lithium supplement, and thus a lithium-ion migration rate of the core of the lithium supplement is further improved. Specifically, the core of the lithium supplement satisfies a chemical formula LiₓM1_{y}M2_{1-y}O₆, where 6≤x≤8 and 0<y<1. A ternary lithium-containing compound containing an element M1 has a relatively high theoretical capacity, which can effectively increase the lithium supplementation capacity of the lithium supplement. An element M2 can provide a less lithium supplementation capacity than the element M1, but the element M2 has a larger ionic radius than the element M1. After doping with the element M2, an interlayer spacing between layered structures in the core can be increased, facilitating rapid deintercalation of lithium ions. Thus, the core of the lithium supplement has a relatively high lithium supplement capacity, a relatively high lithium supplementation capacity, and a relatively high lithium-ion migration rate. Further, since the alkaline surface of the core of the aforementioned lithium supplement may cause defects such as gelation of the cathode slurry, a coating layer is formed on the surface of the core of the aforementioned lithium supplement. The coating layer includes a lithium-containing metallic oxide and a carbon material. The lithium-containing metallic oxide in the coating layer can effectively prevent the generation of impurities such as lithium hydroxide or lithium carbonate by inhibiting the reaction of the core with moisture, carbon dioxide, etc. in the air. However, the lithium-containing metallic oxide has relatively poor electrical conductivity. By adding an appropriate amount of carbon material to the coating layer, the electrical conductivity of the coating layer can be effectively improved, thereby enhancing surface electronic conductivity of the lithium supplement and improving transmission channels of lithium ions and electrons of the lithium supplement.

When the lithium supplement exhibits an X-ray characteristic diffraction peak at a 20 diffraction angle in a range from 20.1° to 20.3°, it indicates that the lithium-containing metallic oxide in the coating layer has a tetragonal phase structure (110 crystal plane). When the lithium supplement exhibits an X-ray characteristic diffraction peak at a 2θ diffraction angle in a range from 17° to 17.3°, it indicates that the core of the lithium supplement has a hexagonal phase structure (101 crystal plane). Further, an X-ray diffraction peak of the lithium supplement at a 20 diffraction angle in a range from 20.1° to 20.3° has a peak intensity of S1, an X-ray diffraction peak of the lithium supplement at a 2θ diffraction angle in a range from 17° to 17.3° has a peak intensity of S2, and S1/S2 ranges from 0.02 to 0.05. In this case, a proportion of phases between the core of the lithium supplement of the tetragonal phase structure and the coating layer of the hexagonal phase structure is relatively appropriate. In this regard, the core of the hexagonal phase structure has a relatively high lithium-ion migration rate, which is beneficial to full deintercalation of the lithium ions from the core. The lithium-containing metallic oxide of the tetragonal phase structure has relatively high structural stability and can effectively prevent the generation of impurities by inhibiting the reaction of the core with moisture, carbon dioxide, etc. At the same time, The lithium-containing metallic oxide of the tetragonal phase structure also has better lithium deintercalation properties. As a result, the coating layer of the surface formed by the lithium-containing metallic oxide and the carbon material has a relatively insignificant effect on the lithium supplementation performance of the core. In this way, the transmission channels of the lithium ions and the electrons of the lithium supplement are effectively improved.

A first aspect of the present disclosure provides a lithium supplement. The lithium supplement includes a core and a coating layer. The core satisfies a chemical formula LiₓM1_{y}M2_{1-y}O₆, where: 6≤x≤8; 0<y<1; M1 is at least one of Zr, Nb, Sb, Bi, Ru, Ta, Sn, Hf, Ir, Pr, Pt, or Np; and M2 is at least one of W, Ge, Ca, Ce, K, or Ta. The coating layer is located on at least part of a surface of the core. The coating layer includes a lithium-containing metallic oxide and a carbon material. The lithium-containing metallic oxide satisfies a chemical formula LiₐM_{b}O_{c}, where: 1.8≤a≤2; 0.7≤b≤1.1; 2.8≤c≤3; and M includes Ti and/or Zr. An X-ray diffraction peak of the lithium supplement at a 20 diffraction angle in a range from 20.1° to 20.3° has a peak intensity of S1, and an X-ray diffraction peak of the lithium supplement at a 2θ diffraction angle in a range from 17° to 17.3° has a peak intensity of S2. S1/S2 ranges from 0.02 to 0.05. Thus, the aforementioned lithium supplement has the relatively high lithium supplementation capacity and the relatively high lithium-ion migration rate. A stable coating layer of the tetragonal phase structure exists on the surface of the core of the hexagonal phase structure. When the ratio of S1 to S2 meets the aforementioned limitation, the coating layer can effectively improve stability of the core, reduce the increase in the viscosity of the cathode slurry caused by the alkalinity of the surface of the core during use of the lithium supplement, thereby having excellent processing performance. When the aforementioned lithium supplement is applied to the techniques of the cathode-side lithium supplementation, the lithium supplement can fully decompose and release active lithium ions during a charging process of the battery, thereby replenishing the loss of the active lithium ions caused by formation of an SEI film and achieving the effect of improving the energy density and a cycle life of the lithium battery.

As an example, x may be 6, 6.5, 7, 7.5, or 8.

As an example, y may be 0.1, 0.2, 0.3, 0.4, 0.5, 0.6, 0.7, 0.8, or 0.9.

As an example, a may be 1.8, 1.9, or 2.

As an example, b may be 0.7, 0.8, 0.9, 1, or 1.1.

As examples, c may be 2.8, 29 or 3.

As an example, S1/S2 may be 0.02, 0.03, 0.04, or 0.05.

The description of "the ratio of the peak intensity of the diffraction peak" in the present disclosure has a meaning well known in the art and can be measured using instruments and methods that are well known in the art. For example, it can be obtained by the following method: an X-ray automatic diffractometer was adopted to analyze phase and crystal structure, with an operating voltage of 40 kV and an operating current of 250 mA, continuous scanning was adopted with a scanning speed of 4°/min, a step size of 0.02°, and a scanning angle in a range from 10° to 80°.

In some embodiments, a mass fraction of the lithium-containing metallic oxide in the lithium supplement ranges from 0.01% to 0.1%, and/or a mass fraction of the carbon material in the lithium supplement ranges from 0.01% to 0.5%.

As an example, the mass fraction of the lithium-containing metallic oxide in the lithium supplement may be 0.01%, 0.02%, 0.03%, 0.04%, 0.05%, 0.06%, 0.07%, 0.08%, 0.09%, or 0.1%.

When the mass fraction of the lithium-containing metallic oxide in the lithium supplement falls within the above range, the lithium-containing metallic oxide in the coating layer can sufficiently exert the ultra-high ion conductivity thereof and prevent the formation of an impurity layer on the surface of the core by inhibiting the reaction of the core with the moisture, the carbon dioxide, etc.

As an example, the mass fraction of the carbon material in the lithium supplement may be 0.01%, 0.05%, 0.1%, 0.15%, 0.2%, 0.25%, 0.3%, 0.35%, 0.4%, 0.45%, or 0.5%.

When the mass fraction of the carbon material in the lithium supplement falls within the above range, the carbon material in the coating layer can effectively improve the electrical conductivity of the coating layer, thereby enhancing the surface electronic conductivity of the lithium supplement, improving the transmission channels of the lithium ions and the electrons of the lithium supplement, and having a relatively small effect on the lithium supplementation capacity of the lithium supplement.

In some embodiments, lattice parameters of the core satisfy: a=b; a≠c; and c/a ranging from 2 to 3. Thus, the lithium-ion migration rate of the lithium supplement can be increased.

As an example, c/a may be 2, 2.1, 2.2, 2.3, 2.4, 2.5, 2.6, 2.7, 2.8, 2.9, or 3.

When the lattice parameters of the core satisfy: a=b, and a≠c, the core is a hexagonal crystal system. Based on the characteristic symmetry of the hexagonal crystal system, characteristics of basis vectors corresponding to a lattice of the hexagonal crystal system are that two secondary axes are perpendicular to a principal axis, magnitudes of basis vectors of the two secondary axis are equal, and an angle between the secondary axes is 120°. That is, the lattice parameters of the core are characterized by: a=b≠c; α=β=90°; and γ=120°. In this case, the lattices are of a layered structure. Subsequently, by matching elements with different chemical valence states and designing unbalanced charges in transitional metallic layer, it is conducive to formation of vacancies of the lithium-ion layer, thereby achieving rapid transmission and efficient utilization of the lithium ions.

In some embodiments, a ranges from 0.4 nm to 0.7 nm, and c ranges from 1.4 nm to 1.6 nm. Thus, the lithium-ion migration rate of the lithium supplement can be further improved.

As an example, a may be 0.4 nm, 0.45 nm, 0.5 nm, 0.55 nm, 0.6 nm, 0.65 nm, or 0.7 nm.

As an example, c may be 1.4 nm, 1.45 nm, 1.5 nm, 1.55 nm, or 1.6 nm.

The term "lattice parameter" in the present disclosure has a meaning well known in the art and can be measured using instruments and methods that are well known in the art. For example, the lattice parameter can be obtained by an X-ray diffraction test.

In some embodiments, the core has a Dv50 particle size ranging from 1 µm to 10 µm, and/or the coating layer has a thickness ranging from 50 nm to 500 nm. Thus, the coating layer can improve storage performance of the lithium supplement and enhance the electrical conductivity of the lithium supplement, thereby facilitating full utilization of the lithium supplementation capacity of the lithium supplement.

As an example, the Dv50 particle size of the core may be 1 µm, 1.5 µm, 2 µm, 2.5 µm, 3 µm, 3.5 µm, 4 µm, 4.5 µm, 5 µm, 5.5 µm, 6 µm, 6.5 µm, 7 µm, 7.5 µm, 8 µm, 8.5 µm, 9 µm, 9.5 µm, or 10 µm.

As an example, the thickness of the coating layer may be 50 nm, 100 nm, 150 nm, 200 nm, 250 nm, 300 nm, 350 nm, 400 nm, 450 nm, or 500 nm.

In some embodiments, the core includes at least one of Li₈Zr_{0.9}W_{0.1}O₆, Li₇Nb_{0.8}Ta_{0.2}O₆, Li₇Sb_{0.9}Ta_{0.1}O₆, Li₇Ru_{0.7}W_{0.2}Ce_{0.1}O₆, Li₈Sn_{0.9}Ca_{0.1}O₆, Li₈Hf_{0.7}W_{0.2}Ca_{0.1}O₆, Li₈Ir_{0.6}W_{0.2}Ce_{0.2}O₆, Li₈Pr_{0.5}W_{0.3}Ca_{0.2}O₆, or Li₈Pt_{0.7}W_{0.2}Ca_{0.1}O₆. Thus, the lithium supplementation capacity of the lithium supplement can be effectively improved, and the decomposition potential of the lithium supplement can be reduced.

When the core of the lithium supplement includes the aforementioned substances, the core has a relatively high lithium supplementation capacity and a relatively high lithium supplement capacity.

As examples, Li₈Zr_{0.9}W_{0.1}O₆ has a theoretical capacity of 883 mAh/g; Li₇Nb_{0.8}Ta_{0.2}O₆ has a theoretical capacity of 790 mAh/g; Li₇Sb_{0.9}Ta_{0.1}O₆ has a theoretical capacity of 704 mAh/g; Li₇Ru_{0.7}W_{0.2}Ce_{0.1}O₆ has a theoretical capacity of 764 mAh/g; Li₈Sn_{0.9}Ca_{0.1}O₆ has a theoretical capacity of 793 mAh/g; Li₈Hf_{0.7}W_{0.2}Ca_{0.1}O₆ has a theoretical capacity of 650 mAh/g; Li₈Ir_{0.6}W_{0.2}Ce_{0.2}O₆ has a theoretical capacity of 624 mAh/g; Li₈Pr_{0.5}W_{0.3}Ca_{0.2}O₆ has a theoretical capacity of 733 mAh/g; and Li₈Pt_{0.7}W_{0.2}Ca_{0.1}O₆ has a theoretical capacity of 619 mAh/g.

In some embodiments, a graphitization degree of the carbon material is greater than or equal to 60%. Thus, the electrical conductivity of the lithium supplement can be further improved.

When the graphitization degree of the carbon material falls within the aforementioned range, the electrical conductivity is better with the internal structure of the carbon material that more closely resembles that of ideal graphite.

A second aspect of the present disclosure provides a method for preparing the aforementioned lithium supplement. Thus, with the relatively simple method, the aforementioned lithium supplement having the excellent lithium supplementation performance can be prepared. Specifically, the method for preparing the lithium supplement can include operations at S100 and S200.

At S100, first sintering treatment is performed on a lithium source, an M1 source, and an M2 source in an oxygen-containing atmosphere to obtain the core.

In some embodiments, in this step, the M1 source, the M2 source, and the lithium source are uniformly mixed according to the molar ratio in the chemical formula, and sintered in the oxygen-containing atmosphere, to obtain the core of the lithium supplement core with the chemical formula LiₓM1_{y}M2_{1-y}O₆, where: 6≤x≤8; and 0<y<1.

In some embodiments, the lithium source includes at least one of lithium carbonate, lithium hydroxide, or lithium oxide.

In some embodiments, the M1 source includes at least one of oxide of M1, chloride of M1, nitrate of M1, or hydroxide of M1.

In some embodiments, the M2 source includes at least one of oxide of M2, chloride of M2, nitrate of M2, or hydroxide of M2.

In some embodiments, a temperature of the first sintering treatment ranges from 700°C to 1,200°C, and a duration of the first sintering treatment ranges from 8 hours to 24 hours. Thus, it is conducive to obtaining pure-phase core particles having a moderate particle size.

As an example, the temperature of the first sintering treatment may be 700°C, 800°C, 900°C, 1,000°C, 1,100°C, or 1,200°C.

As an example, the duration of the first sintering treatment may be 8 hours, 10 hours, 12 hours, 14 hours, 16 hours, 18 hours, 20 hours, 22 hours, or 24 hours.

When the temperature and the duration of the first sintering treatment fall within the aforementioned ranges, it is conducive to the formation of the core of the hexagonal phase structure. Moreover, it leads to relatively high stability of the phase structure, few impurity phases, and the moderate particle size of the formed core particles.

In some embodiments, the oxygen-containing atmosphere may be an oxygen-containing atmosphere such as oxygen or air.

At S200, second sintering treatment is performed on the core, the M source, and the carbon source in an inert atmosphere.

In some embodiments, in this step, the M source is uniformly mixed with the core, and then mixed with the carbon source, and then the mixture is sintered in an inert atmosphere to form the coating layer on at least part of the surface of the core, to obtain the lithium supplement.

In some embodiments, the M source includes at least one of zirconium propoxide, zirconium oxide, zirconium nitrate, zirconium oxychloride, lithium zirconate, zirconium chloride, titanium oxide, titanium tetrachloride, titanium nitrate, or titanium alkoxide.

In some embodiments, the carbon source includes at least one of glucose, starch, sucrose, or graphite. Thus, it is conducive to the formation of the lithium-containing metallic oxide on the surface of the core.

In some embodiments, a temperature of the second sintering treatment ranges from 400°C to 800°C, and a duration of the second sintering treatment ranges from 6 hours to 10 hours. Thus, it is conducive to the formation of the lithium-containing metallic oxide and the carbon material in the coating layer.

As an example, the temperature of the second sintering treatment may be 400°C, 500°C, 600°C, 700°C, or 800°C.

As an example, the duration of the second sintering treatment may be 6 hours, 7 hours, 8 hours, 9 hours, or 10 hours.

When the temperature and the duration of the second sintering treatment fall within the aforementioned range, it is conducive to the formation of the lithium-containing metallic oxide of the tetragonal phase structure and the carbon material with a relatively high graphitization degree. Moreover, it leads to relatively high stability of the phase structure and less carbon loss.

In some embodiments, the inert atmosphere is required to be used during the second sintering treatment to form the coating layer, to effectively reduce a reaction between the carbon source and an active atmosphere, thereby reducing the carbon loss. For example, the carbon source may be oxidized in the active atmosphere, such as the oxygen-containing atmosphere, to generate carbon dioxide or carbon monoxide gas, which then escapes, resulting in the carbon loss.

As an example, the inert atmosphere may include an atmosphere without oxygen and hydrogen, such as nitrogen and argon.

In some embodiments, the method further includes, prior to the second sintering treatment: mixing the core, the M source, and the carbon source in a solvent, and performing drying treatment on the mixture. Thus, the core, the carbon source, and M source can be fully dispersed in the solvent, which is conducive to more uniform mixing of the core, the M source, and the carbon source. Then, the solvent is removed through the drying treatment, which is in turn conducive to improving coating uniformity of the coating layer.

In some embodiments, the solvent includes at least one of ethanol and isopropanol.

In some embodiments, the drying treatment includes at least one of spray drying, freeze drying, or flash drying.

A third aspect of the present disclosure provides a cathode slurry. The cathode slurry includes the aforementioned lithium supplement or the lithium supplement prepared by the aforementioned method. Thus, the cathode slurry has all the characteristics and advantages of the aforementioned lithium supplement and the aforementioned method for preparing the lithium supplement, and details thereof will be omitted herein.

In some embodiments, the cathode slurry has a viscosity ranging from 1,000 mPa·s to 8,000 mPa·s, which is conducive to improving processing performance of the cathode slurry.

By forming the coating layer on the surface of the core of the lithium supplement, the influence of the alkaline surface of the core on stability of the slurry is effectively suppressed. When the lithium supplement is added to the cathode slurry, the strong alkaline surface of the lithium supplement cannot cause the lithium precipitation reaction, thereby effectively alleviating a significant increase in the viscosity of the cathode slurry caused by the increase in the alkalinity of the cathode slurry. In this way, it is conducive for the cathode slurry to meet the coating requirements.

As an example, a cathode material, the lithium supplement, the solvent (such as N-methylpyrrolidone), a binder (such as polyvinylidene fluoride), and a conductive agent (such as carbon black and acetylene black) can be mixed in a mass ratio of 90: 2: 100: 4:4 to obtain the cathode slurry.

A fourth aspect of the present disclosure provides a battery. The battery includes a cathode plate. The cathode plate includes a cathode current collector and a cathode active material layer at least located on a side of the cathode current collector. The cathode active material layer is prepared with the aforementioned cathode slurry. Thus, the battery has all the characteristics and advantages of the aforementioned cathode slurry, and details thereof will be omitted herein.

The solutions of the present disclosure are described below through specific embodiments. It should be noted that the following embodiments are only used to illustrate the present disclosure and should not be construed as a limitation to the scope of the present disclosure. When the specific technology or conditions are not specified in the embodiments, the technology or conditions described in the literature in the art or a product manual will prevail. Reagents and instruments used without specifying the manufacturer are all conventional and commercially available products.

### Example 1

(1) Lithium carbonate (lithium source), zirconium dioxide (M1 source), and tungsten oxide (M2 source) were mixed uniformly in a high-speed mixer according to a molar ratio of Li:Zr:W=8:0.9:0:1 and sintered at 900°C for 10 hours in an air atmosphere to obtain a core with a chemical formula Li₈Zr_{0.9}W_{0.1}O₆.
(2) Zirconium propoxide (M source) and the aforementioned core were weighed in a molar ratio of Zr:W=1:10 and mixed to obtain a first mixture. The first mixture and glucose (carbon source) were weighed in a mass ratio of 99:1 and mixed to obtain a second mixture. The second mixture was added into pure water to achieve a solid content of 50%, to obtain a mixed material. The mixed material was subjected to sand milling in a sand mill at a rotational speed of 2,500 rpm for 1 hour, to obtain a mixed slurry. The obtained mixed slurry was dried in a spray dryer to obtain a powder. Sintering treatment was performed on the powder at 800°C in a nitrogen atmosphere to finally obtain a lithium supplement. The lithium supplement has a coating layer containing Li₂ZrO₃ and a carbon material, and a core of Li₈Zr_{0.9}W_{0.1}O₆.

Examples 2 to 16 and Comparative Examples 1 to 6 were same Example 1, except for the following differences as listed in Table 1. In Comparative Example 3, no M2 source was added for forming the core. In Comparative Example 4, no M1 source was added for forming the core. In Comparative Example 5, no M source was added for forming the core. In Comparative Example 6, no carbon source was added for forming the core.

**[Table 1]**

| Serial number | M1 source | M2 source | Li:M1:M2 (molar ratio) | Temperature/°C and duration/h of first heat treatment | M2: M (molar ratio) of core | Mass ratio of first mixture to carbon source |
|---|---|---|---|---|---|---|
| Example 1 | Zirconium dioxide | Tungsten oxide | 8:0.9:0.1 | 900; 10 | 99:1 | 99:1 |
| Example 2 | Praseodymium dioxide | Tungsten oxide, calcium oxide (molar ratio of W:Ca = 3:2) | 8:0.5:0.5 | 1,000; 20 | 500:1 | 99:1 |
| Example 3 | Zirconium dioxide | Tungsten oxide | 8:0.9:0.1 | 900; 10 | 99.4:0.6 | 99:1 |
| Example 4 | Zirconium dioxide | Tungsten oxide | 8:0.9:0.1 | 900; 10 | 99:1 | 99:1 |
| Example 5 | Zirconium dioxide | Tungsten oxide | 8:0.9:0.1 | 900; 10 | 98.4:1.6 | 99:1 |
| Example 6 | Germanium oxide | Tantalum oxide | 8:0.8:0.2 | 1,100; 12 | 200:1 | 99:1 |
| Example 7 | Ruthenium oxide | Tungsten oxide, cerium oxide (molar ratio of W: Ce = 2:1) | 7:0.7:0.3 | 1,100;12 | 300:1 | 99:1 |
| Example 8 | Hafnium Oxide | Tungsten oxide, calcium oxide (molar ratio of W:Ca = 2:1) | 8:0.7:0.3 | 1,100;12 | 300:1 | 99:1 |
| Example 9 | Zirconium dioxide | Tungsten oxide | 8:0.9:0.1 | 900; 10 | 99.8:0.2 | 99:1 |
| Example 10 | Zirconium dioxide | Tungsten oxide | 8:0.9:0.1 | 900; 10 | 99:1 | 99:1 |
| Example 11 | Zirconium dioxide | Tungsten oxide | 8:0.9:0.1 | 900; 10 | 98:2 | 99:1 |
| Example 12 | Zirconium dioxide | Tungsten oxide | 8:0.9:01 | 900; 10 | 99:1 | 99.95:0.05 |
| Example 13 | Zirconium dioxide | Tungsten oxide | 8:0.9:0.1 | 900; 10 | 99:1 | 99:1 |
| Example 14 | Zirconium dioxide | Tungsten oxide | 8:0.9:0.1 | 900; 10 | 99:1 | 97.5:2.5 |
| Example 15 | Germanium oxide | Tantalum oxide | 8:0.8:0.2 | 1,100; 12 | 99:1 | 99:1 |
| Example 16 | Germanium oxide | Tantalum oxide | 8:0.8:0.2 | 1,100; 12 | 99:1 | 99:1 |
| Comparative Example 1 | Zirconium dioxide | Tungsten oxide | 8:0.9:0.1 | 900; 10 | 99.7:0.3 | 99:1 |
| Comparative Example 2 | Zirconium dioxide | Tungsten oxide | 8:0.9:0.1 | 900; 10 | 98:2 | 99:1 |
| Comparative Example 3 | Zirconium dioxide | / | 8:1:1 | 900; 10 | M1:M=1000:1 | 99:1 |
| Comparative Example 4 | / | Tungsten oxide | 6:1:1 | 900; 10 | 1,000:1 | 99:1 |
| Comparative Example 5 | Zirconium dioxide | Tungsten oxide | 8:0.9:0.1 | 900; 10 | / | 99:1 |
| Comparative Example 6 | Zirconium dioxide | Tungsten oxide | 8:0.9:0.1 | 900; 10 | 99:1 | / |

The parameters of the lithium supplements in the aforementioned examples and comparative examples are listed in Table 2.

**[Table 2]**

| Serial number | Core | | Coating layer | | | Lithium supplement | | | | | |
|---|---|---|---|---|---|---|---|---|---|---|---|
| | Chemical formula | Dv50 particle size/µm | LiₐM_{b}O_{c} Chemical formula | Graphitizatio n degree of carbon material/% | Thickness/ nm | Mass fraction of LiₐM_{b}O_{c} in lithium supplement/wt % | Mass fraction of carbon material in lithium supplement/wt % | S1/S2 | a/nm | c/nm | c/a |
| Example 1 | Li₈Zr_{0.9}W_{0.1}O₆ | 5 | Li₂ZrO₃ | 80 | 100 | 0.05 | 0.2 | 0.03 | 0.54 | 1.54 | 2.85 |
| Example 2 | Li₈Pr_{0.5}W_{0.3} Ca_{0.2}O₆ | 5 | Li₂ZrO₃ | 80 | 100 | 0.05 | 0.2 | 0.03 | 0.55 | 1.59 | 2.89 |
| Example 3 | Li₈Zr_{0.9}W_{0.1}O₆ | 5 | Li₂ZrO₃ | 80 | 80 | 0.03 | 0.2 | 0.02 | 0.53 | 1.53 | 2.89 |
| Example 4 | Li₈Zr_{0.9}W_{0.1}O₆ | 5 | Li₂ZrO₃ | 80 | 100 | 0.05 | 0.2 | 0.03 | 0.54 | 1.54 | 2.85 |
| Example 5 | Li₈Zr_{0.9}W_{0.1}O₆ | 5 | Li₂ZrO₃ | 80 | 120 | 0.08 | 0.2 | 0.05 | 0.55 | 1.54 | 2.80 |
| Example 6 | Li₈Ge_{0.8}Ta_{0.2} O₆ | 5 | Li₂ZrO₃ | 80 | 100 | 0.05 | 0.2 | 0.03 | 0.55 | 1.10 | 2.00 |
| Example 7 | Li₇Ru_{0.7}W_{0.2} Ce_{0.1}O₆ | 5 | Li₂ZrO₃ | 80 | 100 | 0.05 | 0.2 | 0.03 | 0.53 | 1.33 | 2.51 |
| Example 8 | Li₈Hf_{0.7}W_{0.2} Ca_{0.1}O₆ | 5 | Li₂ZrO₃ | 80 | 100 | 0.05 | 0.2 | 0.03 | 0.52 | 1.56 | 3.00 |
| Example 9 | Li₈Zr_{0.9}W_{0.1} O₆ | 5 | Li₂ZrO₃ | 80 | 100 | 0.01 | 0.2 | 0.006 | 0.55 | 1.55 | 2.82 |
| Example 10 | Li₈Zr_{0.9}W_{0.1} O₆ | 5 | Li₂ZrO₃ | 80 | 100 | 0.05 | 0.2 | 0.03 | 0.54 | 1.54 | 2.85 |
| Example 11 | Li₈Zr_{0.9}W_{0.1} O₆ | 5 | Li₂ZrO₃ | 80 | 100 | 0.1 | 0.2 | 0.06 | 0.53 | 1.53 | 2.89 |
| Example 12 | Li₈Zr_{0.9}W_{0.1} O₆ | 5 | Li₂ZrO₃ | 80 | 95 | 0.05 | 0.01 | 0.03 | 0.54 | 1.54 | 2.85 |
| Example 13 | Li₈Zr_{0.9}W_{0.1} O₆ | 5 | Li₂ZrO₃ | 80 | 100 | 0.05 | 0.2 | 0.03 | 0.54 | 1.54 | 2.85 |
| Example 14 | Li₈Zr_{0.9}W_{0.1} O₆ | 5 | Li₂ZrO₃ | 80 | 105 | 0.05 | 0.5 | 0.03 | 0.54 | 1.54 | 2.85 |
| Example 15 | Li₈Ge_{0.8}Ta_{0.2} O₆ | 5 | Li₂ZrO₃ | 80 | 100 | 0.05 | 0.2 | 0.03 | 0.55 | 1.10 | 2.00 |
| Example 16 | Li₈Ge_{0.8}Ta_{0.2} O₆ | 5 | Li₂ZrO₃ | 80 | 100 | 0.05 | 0.2 | 0.03 | 0.55 | 1.10 | 2.00 |
| Comparative Example 1 | Li₈Zr_{0.9}W_{0.1} O₆ | 5 | Li₂ZrO₃ | 80 | 100 | 0.05 | 0.2 | 0.01 | 0.54 | 1.54 | 2.85 |
| Comparative Example 2 | Li₈Zr_{0.9}W_{0.1} O₆ | 5 | Li₂ZrO₃ | 80 | 100 | 0.05 | 0.2 | 0.06 | 0.54 | 1.54 | 2.85 |
| Comparative Example 3 | Li₈ZrO₆ | 5 | Li₂ZrO₃ | 80 | 100 | 0.05 | 0.2 | 0.03 | 0.50 | 1.54 | 3.08 |
| Comparative Example 4 | Li₆WO₆ | 5 | Li₂ZrO₃ | 80 | 100 | 0.05 | 0.2 | 0.03 | 0.54 | 1.54 | 2.85 |
| Comparative Example 5 | Li₈Zr_{0.9}W_{0.1} O₆ | 5 | / | 80 | 100 | / | 0.2 | 0 | 0.54 | 1.54 | 2.85 |
| Comparative Example 6 | Li₈Zr_{0.9}W_{0.1} O₆ | 5 | Li₂ZrO₃ | / | 100 | 0.05 | / | 0.03 | 0.54 | 1.54 | 2.85 |

The lithium supplements in the aforementioned examples and comparative examples were prepared into button cells, and a preparation method thereof was as follows.

The lithium supplement material, the conductive agent acetylene black, and the adhesive polyvinylidene fluoride were mixed in a mass ratio of 90:5:5. The mixture was coated on an aluminum foil and subjected to drying treatment, and stamped at a pressure of 100 MPa to form an electrode plate having a diameter of 12 mm and a thickness of 120 µm as a cathode plate. A lithium metallic sheet having a diameter of 17 mm and a thickness of 1 mm was used as a negative electrode plate. A Celgard 2400 porous membrane having a thickness of 25 µm was used as a separator. 1 mol/L LiPF6 was used as an electrolyte. A solvent used was a mixed solution of equal volumes of ethylene carbonate (EC) and diethyl carbonate (DEC). The cathode sheet, the separator, the negative electrode plate, and the electrolyte were assembled into a CR2025 button cell in an argon glove box where both a water content and an oxygen content are less than 5 ppm.

The button cell in the aforementioned embodiments and comparative examples were tested as follows, and test results are shown in Table 2.

Decomposition potential and charge and discharge capacity: a rate test was carried out for the assembled button cell at a voltage ranging from 3.0V to 4.9V and at a rate of 0.1C, and a charge specific capacity, a discharge specific capacity, and discharge specific energy were read from a test software. The decomposition potential of the lithium supplement = the discharge specific energy/the discharge specific capacity.

Lithium-ion migration rate of lithium supplement: an Electrochemical Impedance Spectroscopy (EIS) alternating-current impedance test was carried out for the assembled button cell in an electrochemical workstation, and the lithium-ion migration rate of the lithium supplement was obtained from a slope of a straight-line segment of an alternating-current impedance graph.

**[Table 3]**

| Serial number | Lithium supplement | | Viscosity of cathode slurry/(mPa·s) | Button cell | |
|---|---|---|---|---|---|
| | Decomposition potential/V | Lithium-ion conductivity/(S/cm) | | Initial charge capacity of lithium supplement (mAh/g) | Initial discharge capacity of lithium supplement (mAh/g) |
| Example 1 | 4.3 | 9×10⁻⁶ | 5,000 | 800 | 10 |
| Example 2 | 4.2 | 5×⁻10⁶ | 6,000 | 720 | 8 |
| Example 3 | 4.3 | 8×10⁻⁶ | 5,200 | 815 | 8 |
| Example 4 | 4.3 | 9×10⁻⁶ | 5,000 | 800 | 10 |
| Example 5 | 4.3 | 1×10⁻⁵ | 4,800 | 785 | 12 |
| Example 6 | 4.1 | 2×10⁻⁶ | 5,000 | 950 | 20 |
| Example 7 | 4.1 | 5×10⁻⁶ | 5,000 | 760 | 15 |
| Example 8 | 4.1 | 3×10⁻⁶ | 5,000 | 640 | 10 |
| Example 9 | 4.3 | 5×10⁻⁶ | 6,000 | 820 | 9 |
| Example 10 | 4.3 | 9×10⁻⁶ | 5,000 | 800 | 10 |
| Example 11 | 4.3 | 1.1×10⁻⁵ | 4,000 | 790 | 12 |
| Example 12 | 4.3 | 8×10⁻⁶ | 5,000 | 802 | 10 |
| Example 13 | 4.3 | 9×10⁻⁶ | 5,000 | 800 | 10 |
| Example 14 | 4.3 | 5×10⁻⁶ | 5,000 | 790 | 8 |
| Example 15 | 4.1 | 2×10⁻⁶ | 5,000 | 950 | 20 |
| Example 16 | 4.1 | 2×10⁻⁶ | 5,000 | 950 | 20 |
| Comparative Example 1 | 4.3 | 9×10⁻⁷ | 20,000 | 590 | 25 |
| Comparative Example 2 | 4.3 | 9×10⁻⁷ | 4,000 | 580 | 25 |
| Comparative Example 3 | 4.3 | 2×10⁻⁷ | 5,000 | 550 | 25 |
| Comparative Example 4 | 4.3 | 9×10⁻⁸ | 5,000 | 450 | 25 |
| Comparative Example 5 | 4.3 | 9×10⁻⁸ | 30,000 | 420 | 25 |
| Comparative Example 6 | 4.3 | 9×10⁻⁶ | 5,000 | 400 | 25 |

The test results show that, the coating layer on the surface of the lithium supplement in Examples 1 to 16 can effectively reduce the increase in the viscosity of the cathode slurry caused by the alkalinity of the surface of the core during the use of the lithium supplement, and the processing performance of the cathode slurry was better. The relatively higher initial charge capacity of the lithium supplement indicates that the lithium ions of the lithium supplement were released more fully during the charging process, and the relatively lower initial discharge capacity of the lithium supplement indicates that fewer lithium ions were re-intercalated in the lithium supplement during the discharging process, which can achieve a better in-situ pre-lithiation effect for the lithium battery.

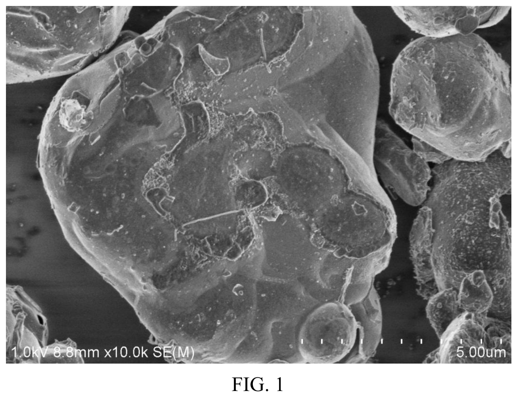

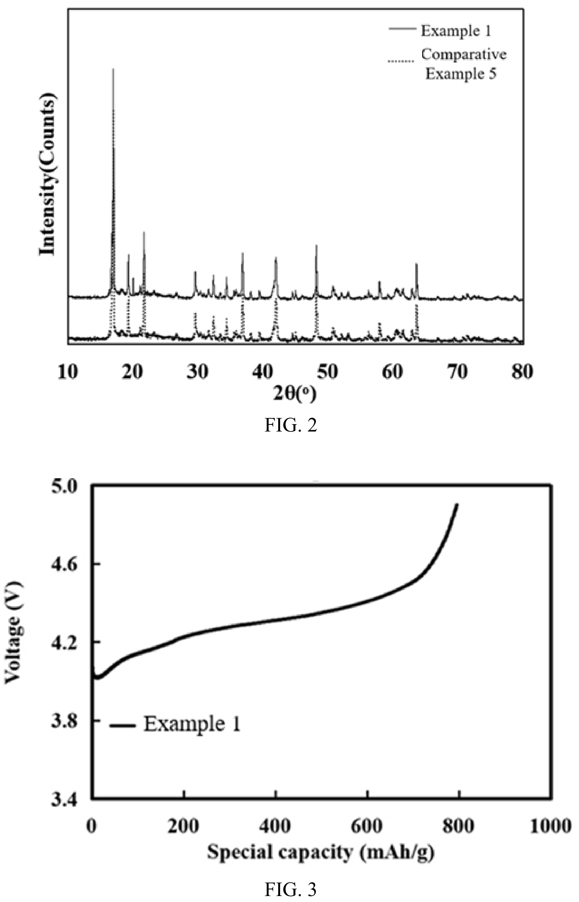

FIG. 1 is a scanning electron microscope image of the lithium supplement in Example 1, revealing the presence of the coating layer on the surface of the core. FIG. 2 indicates that the S1/S2 of the lithium supplement in Example 1 was 0.03, while the S1/S2 of the lithium supplement in Comparative Example 5 was 0. FIG. 3 is a charge-discharge graph of the button cell in Example 1.

In Comparative Example 1, the coating layer of the lithium supplement had an excessively small amount of tetragonal-phase lithium-containing metallic oxide, and thus the viscosity of the cathode slurry was significantly increased. In Comparative Example 2, there was an excessively small amount of tetragonal-phase lithium-containing metallic oxide of the lithium supplement, and thus the viscosity of the cathode slurry was significantly increased; and there was an excessively large amount of tetragonal-phase lithium-containing metallic oxide, resulting in the relatively low viscosity of the cathode slurry and the significantly reduced lithium supplementation capacity of the lithium supplement. In Comparative Example 3, the core of the lithium supplement contained no element M2, resulting in a relatively low lithium-ion transmission speed of the core, and the core of the lithium supplement contained no element M1, resulting in an excessively low lithium supplementation capacity of the lithium supplement. In Comparative Example 5, no tetragonal-phase lithium-containing metallic oxide was formed in the coating layer of the lithium supplement, and thus the viscosity of the cathode slurry was significantly increased. In Comparative Example 6, no carbon material was formed in the coating layer of the lithium supplement, leading to poorer performance of the lithium supplement in terms of the lithium supplementation capacity.

In the present disclosure, terms such as "first" and "second" are used herein for purposes of description and are not intended to indicate or imply relative importance, or to implicitly show the number of indicated technical features. Terms such as "first feature" and "second feature" may include one or more of these features.

In the present disclosure, "A and/or B" may include A only, B only, or both A and B. A and B are only used for the purpose of illustration and may be any technical features connected by "and/or" in the present disclosure.

It should be noted that the present disclosure is not limited to the above-mentioned embodiments. The above-mentioned embodiments are merely the purpose of illustration, and any embodiments having substantially the same structure and exerting the same effects as the technical idea within the scope of the technical solutions of the present disclosure are all encompassed by the technical scope of the present disclosure. In addition, various modifications that can be conceived by those skilled in the art to the embodiments, as well as other forms constructed by combining some of the constituent elements of the embodiments, are also encompassed by the scope of the present disclosure without departing from the gist of the present disclosure.

## Claims

1. A lithium supplement, comprising:
a core satisfying a chemical formula LiₓM1_{y}M2_{1-y}O₆, where: 6≤x≤8; 0<y<1; M1 is at least one of Zr, Nb, Sb, Bi, Ru, Ta, Sn, Hf, Ir, Pr, Pt, or Np; and M2 is at least one of W, Ge, Ca, Ce, K, or Ta; and
a coating layer located on at least part of a surface of the core, the coating layer comprising a lithium-containing metallic oxide and a carbon material, wherein the lithium-containing metallic oxide satisfies a chemical formula LiₐM_{b}O_{c}, where: 1.8≤a≤2; 0.7≤b≤1.1; 2.8≤c≤3; and M comprises Ti and/or Zr, wherein:
an X-ray diffraction peak of the lithium supplement at a 20 diffraction angle in a range from 20.1° to 20.3° has a peak intensity of S1; and
an X-ray diffraction peak of the lithium supplement at a 20 diffraction angle in a range from 17° to 17.3° has a peak intensity of S2, S1/S2 ranging from 0.02 to 0.05.

2. The lithium supplement according to claim 1, wherein:
a mass fraction of the lithium-containing metallic oxide in the lithium supplement ranges from 0.01% to 0.1%; and/or
a mass fraction of the carbon material in the lithium supplement ranges from 0.01% to 0.5%.

3. The lithium supplement according to claim 1, wherein lattice parameters of the core satisfy:
a=b;
a≠c; and
c/a ranging from 2 to 3.

4. The lithium supplement according to claim 3, wherein:
a ranges from 0.4 nm to 0.7 nm; and
c ranges from 1.4 nm to 1.6 nm.

5. The lithium supplement according to any one of claims 1 to 4, wherein:
the core has a Dv50 particle size ranging from 1 µm to 10 µm; and/or
the coating layer has a thickness ranging from 50 nm to 500 nm.

6. The lithium supplement according to any one of claims 1 to 4, wherein the core comprises at least one of Li₈Zr_{0.9}W_{0.1}O₆, Li₇Nb_{0.8}Ta_{0.2}O₆, Li₇Sb_{0.9}Ta_{0.1}P₆, Li₇Ru_{0.7}W_{0.2}Ce_{0.1}O₆, Li₈Sn_{0.9}Ca_{0.1}O₆, Li₈Hf_{0.7}W_{0.2}Ca_{0.1}O₆, Li₈Ir_{0.6}W_{0.2}Ce_{0.2}O₆, Li₈Pr_{0.5}W_{0.3}Ca_{0.2}O₆, or Li₈Pt_{0.7}W_{0.2}Ca_{0.1}O₆.

7. The lithium supplement according to any one of claims 1 to 4, wherein a graphitization degree of the carbon material is greater than or equal to 60%.

8. A method for preparing the lithium supplement according to any one of claims 1 to 7, the method comprising:
performing first sintering treatment on a lithium source, an M1 source, and an M2 source in an oxygen-containing atmosphere to obtain the core; and
performing second sintering treatment on the core, the M source, and the carbon source in an inert atmosphere to form the coating layer on at least part of the surface of the core, to obtain the lithium supplement.

9. The method according to claim 8, wherein:
the lithium source comprises at least one of lithium carbonate, lithium hydroxide, or lithium oxide; and/or
the M1 source comprises at least one of oxide of M1, chloride of M1, nitrate of M1, or hydroxide of M1; and/or
the M2 source comprises at least one of oxide of M2, chloride of M2, nitrate of M2, or hydroxide of M2.

10. The method according to claim 9, wherein:
a temperature of the first sintering treatment ranges from 700°C to 1,200°C; and
a duration of the first sintering treatment ranges from 8 hours to 24 hours.

11. The method according to any one of claims 8 to 10, wherein:
the M source comprises at least one of zirconium propoxide, zirconium oxide, zirconium nitrate, zirconium oxychloride, lithium zirconate, zirconium chloride, titanium oxide, titanium tetrachloride, titanium nitrate, or titanium alkoxide; and/or
the carbon source comprises at least one of glucose, starch, sucrose, or graphite.

12. The method according to claim 11, wherein:
a temperature of the second sintering treatment ranges from 400°C to 800°C; and
a duration of the second sintering treatment ranges from 6 hours to 10 hours.

13. The method according to claim 8, further comprising, prior to the second sintering treatment:
mixing the core, the M source, and the carbon source in a solvent, and performing drying treatment on the mixture.

14. The method according to claim 13, wherein
the solvent comprises at least one of ethanol and isopropanol; and/or
the drying treatment comprises at least one of spray drying, freeze drying, or flash drying.

15. A cathode slurry, comprising:
the lithium supplement according to any one of claims 1 to 7; or
the lithium supplement prepared by the method according to any one of claims 8 to 14.

16. The cathode slurry according to claim 15, wherein the cathode slurry has a viscosity ranging from 1,000 mPa·s to 8,000 mPa·s.

17. A battery, comprising a cathode plate, wherein the cathode plate comprises:
a cathode current collector; and
a cathode active material layer at least located on a side of the cathode current collector, the cathode active material layer being prepared with the cathode slurry according to claim 15 or 16.
